(19) Europäisches Patentamt
European Patent Office
Office européen des brevets

(11) EP 3 334 064 A1

(12) EUROPEAN PATENT APPLICATION

(43) Date of publication:
13.06.2018 Bulletin 2018/24

(51) Int Cl.:
H04B 10/116 (2013.01)

(21) Application number: 16202625.6

(22) Date of filing: 07.12.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Nokia Technologies Oy
02610 Espoo (FI)

(72) Inventors:
• Baracca, Paolo
10435 STUTTGART (DE)

• Malanchini, Ilaria
70435 Stuttgart (DE)
• Liao, Qi
70435 Stuttgart (DE)
• Suryaprakash, Vinay
70435 Stuttgart (DE)

(74) Representative: DREISS Patentanwälte PartG
mbB
Friedrichstrasse 6
70174 Stuttgart (DE)

(54) **DEVICE FOR A RADIO COMMUNICATIONS SYSTEM AND METHOD OF OPERATING A DEVICE FOR A RADIO COMMUNICATIONS SYSTEM**

(57) Device (100) for a radio communications system (1000), wherein said device (100) includes at least a processing unit (102), a memory unit (104) and a transceiver (106), wherein said transceiver (106) is configurable to exchange data with at least one further device by means of a radio communications channel (RCC), wherein said device (100) comprises a light emitting device (110) configurable to emit (202) at least one light signal (LS) in the infrared wavelength range comprising information related to said device (100) facilitating establishment of said radio communications channel between the device and the at least one further device.

Fig. 1

## Description

## Specification

## Field of the invention

The invention relates to a device for a radio communications system. The invention further relates to a method of operating a device for a radio communications system.
The invention also relates to a mobile device and a method of operating a mobile device.

## Background

Conventional devices for radio communications systems such as e.g. WiFi access points are configured to transmit radio frequency (RF) beacon signals, for example beacon frames as defined by the IEEE 802.11 protocol family, that enable other devices such as mobile user equipment devices to detect said access points while being in a radio coverage range of said access point. This way, even a plurality of different access points may be discovered by other devices. However, if the other device is not within a radio coverage range, the access point cannot be detected.

## Summary

Various embodiments provide an improved device for a radio communications system and an improved method of operating such device which are more flexible in use and which avoid at least some of the abovementioned limitations of prior art.
In some embodiments, said device includes at least a processing unit, a memory unit and a transceiver, wherein said transceiver is configurable to exchange data with at least one further device by means of a radio communications channel, wherein said device comprises a light emitting device configurable to emit at least one light signal in the infrared (IR) wavelength range comprising information related to said device facilitating establishment of said radio communications channel between the device and the at least one further device. This advantageously enables to optically signal the presence of the device, which may e.g. be an access point of said communications network, so that it may be detected by other devices even if these other devices are not located within a radio coverage area of said access point. Further, the optical signalling advantageously enables an efficient association of a specific spatial position with said device or access point, which may not be attained with conventional RF based beaconing and detection approaches. Still further, novel augmented reality (AR) applications are enabled by the optical signalling according to the embodiments, as will be explained in detail further below. Still further, the information related to said device facilitates establishment of said radio communications channel between the device and the at least one further device.
Moreover, due to the use of infrared light, the light signal does not fall into the visible spectrum, thus being invisible to the naked (human) eye. At the same time, opto-electric detectors such as silicon detectors present in today's cameras are usually comparatively sensitive to wavelengths in the infrared range, so that many options for economic detection of said light signal are at hand. Particularly, when using light signals having wavelengths in the infrared range between about 700 nm (nanometer) and about 1400 nm, preferably between about 780 nm and 1000 nm, many camera systems integrated e.g. in smartphones or tablets may be capable of detecting such light signals, so that the optical signalling provided by the device according to the embodiments may easily be detected by existing smartphones and other mobile devices equipped with comparable camera systems.
In the context of the present application, the expression "configurable" defines that the device according to the embodiments may include at least one operating mode in which the device is acting according to at least one aspect of the embodiments, e.g. at least temporarily transmitting said optical signal in the IR wavelength range. I.e., according to some embodiments, the device may also comprise further operating mode(s) wherein no optical signal transmitting functionality in the sense of the embodiments is provided.
Particularly, the expression "configurable" also includes a device which is, for example in a static configuration, configured to perform aspects of the embodiments. In addition, the expression "configurable" also includes a device which can be configured (e.g., by a further device such as a base station or other control mechanism, which may e.g. be implemented remotely or locally to the device) to perform aspects of the embodiments, but which comprises at least one operating mode in which it does not perform aspects of the embodiments.
While the application of the principle according to the embodiments is not limited to access points of radio communications systems, in the following description it is exemplarily referred to access point-type devices for explaining further advantageous embodiments.
According to an embodiment, said light emitting device is configurable to provide a modulated light signal comprising information for identification of the device. Thus, the device may be identified by (only) using said modulated light signal. As an example, said information for identification of the device may comprise a unique identifier associated with a specific device or access point, respectively.
According to further embodiments, said light emitting device is configurable to use at least one of the following modulation schemes for providing said modulated light signal: amplitude shift key, particularly on-off keying, OOK, frequency shift keying, FSK, for providing said modulated light signal. In addition to the abovementioned optical signalling, this enables to provide various types of information to be conveyed by means of the modulated light signal.

According to a further embodiment said infrared wavelength range comprises wavelengths between about 700 nanometer, nm, and about 1400 nm, preferably between about 780 nm and about 1000 nm. This is particularly beneficial since many conventional cameras may efficiently detect optical signals of said wavelength range.

According to a further embodiment said light emitting device is configurable to provide a modulated light signal, e.g. using one or more of the abovementioned modulation techniques, comprising at least one of the following information: position information characterizing a spatial position of the device (e.g., comprising global positioning system, GPS, coordinates), one or more operational parameters of the device (e.g., a load state regarding available radio resources that may be used for radio communication with further devices), information characterizing said radio communications channel.

According to further embodiments, alternatively to or in addition to using a light signal in the IR wavelength range, said light emitting device may be configurable to provide a light signal having spectral components in at least one of the following wavelength ranges: a visible (visible to human beings) wavelength range, an ultraviolet (UV) wavelength range, wherein said visible wavelength range comprises wavelengths between about 380 nm and about 700 nm, wherein said UV wavelength range comprises wavelengths between about 10 nm and about 380 nm. When using visible light signals, it may be beneficial to employ modulation frequencies of 25 Hz and above to limit the visual intrusiveness of the light signal, e.g. to avoid flickering that may be perceived by human beings within the range of the optical signal. Combinations of visible light signals and light signals in the IR range are also possible according to further embodiments.

According to further embodiments, the light emitting device may comprise one or more semiconductor light source, such as e.g. light emitting diodes (LED), for example IR diodes.

According to further embodiments, the device according to the embodiments may be a stationary device, for example with a housing of said device fixedly attached to a building, a lamp post, or the like. According to further embodiments, the device according to the embodiments may be a mobile device, e.g. attached to a mobile target system such as a vehicle, particularly an unmanned aerial vehicle (UAV), e.g. a drone.

Some embodiments feature a method of operating a device for a radio communications system, wherein said device includes at least a processing unit, a memory unit and a transceiver, wherein said transceiver is configurable to exchange data with at least one further device by means of a radio communications channel, wherein said device comprises a light emitting device, wherein said light emitting device emits at least one light signal in the infrared wavelength range comprising information related to said device facilitating establishment of said radio communications channel between the device and the at least one further device.

According to a further embodiment, said light emitting device provides a modulated light signal comprising information for identification of the device. According to an embodiment, said light emitting device may use at least one of the following modulation schemes for providing said modulated light signal comprising information for identification of the device: amplitude shift keying, particularly on-off keying, OOK, frequency shift keying, FSK.

According to a further embodiment, said light emitting device provides a modulated light signal comprising at least one of the following information: position information characterizing a spatial position of the device, one or more operational parameters of the device, information characterizing said radio communications channel.

Some embodiments feature a mobile device comprising: a processing unit; a memory unit; a camera configurable to capture at least one image of a surrounding area; a display configurable to display the at least one image to a user; and a transceiver configurable to exchange data with at least one device according to the embodiments over a radio communications channel; wherein the mobile device is configurable to detect, within said at least one image, the presence of the least one device by evaluating at least one light signal in the infrared wavelength range comprising information related to said at least one device for facilitating establishment of said radio communications channel between the mobile device and said device. This way, the access point according to the embodiments may efficiently be detected (and optionally also identified), using the light signal(s) emitted thereby, and a user of the mobile device may e.g. be notified on so detected and/or identified access points. Advantageously, this enables detection and identification of access points according to the embodiments even if the mobile device is not within an RF coverage area of the access point, as well as facilitating establishment of said radio communications channel between the mobile device and said device. Moreover, the principle according to the embodiments enables to enhance existing AR applications that may be provided on said mobile device.

According to an embodiment, said mobile device is configurable to determine a position of said at least one device within said at least one image, and to visualize said at least one device on the display depending on said position.

According to some embodiments, a visualization of said at least one device on the display may comprise a schematic indication of a position and/or a direction in which said at least one device is located with respect to a position and/or spatial orientation of said mobile device and its user. In these embodiments, it is not required to display said at least one image on the display of the mobile device. However, according to further embodiments, it may also be possible to display said at least one image captured by the camera of the mobile device and to additionally visualize said at least one device on said display, for example by adding a schematic representation of said at least one device.

According to further embodiments, said mobile device is configurable to identify said at least one device, to present on said display a real-world environment view based on said at least one image, and to augment said real-world environment view by adding information related to at least one identified device.

According to a further embodiment, said mobile device is configurable to determine a position of said at least one device within said at least one image, and to visualize the position of said at least one device on the display.

According to a further embodiment, said mobile device is configurable to augment (or to provide and augment) a marker at the position of said at least one device within said at least one image on the display.

As mentioned above, said mobile device inter alia comprises a transceiver and is configurable to exchange data with said at least one device by means of a radio communications channel. For example, the principle according to the embodiments may be used to identify a specific access point by a user of said mobile device or by the mobile device itself, and once such identification of said access point has been performed, the user may select said access point for wireless data communications using the radio communications channel provided by said access point.

Some embodiments feature a method of operating a mobile device comprising a processing unit, a memory unit, a camera, a display, and a transceiver, the method comprising: capturing with said camera at least one image of a surrounding area; detecting, within said image, the presence of at least one device according to the embodiments by evaluating at least one light signal in the infrared wavelength range comprising information related to said at least one device for facilitating establishment of a radio communications connection between the mobile device and the at least one device.

According to an embodiment, said mobile device identifies said at least one device, presents on said display a real-world environment view based on said at least one image, and augments said real-world environment view by adding information related to the at least one identified device.

According to a further embodiment, said method further comprises: - determining a position of said at least one device within said at least one image; and - visualizing the position of said at least one device within said at least one image on the display.

According to a further embodiment, said step of visualizing comprises augmenting a marker at the position of said at least one device within said at least one image on the display.

## Brief description of the figures

Further features, aspects and advantages of the illustrative embodiments are given in the following detailed description with reference to the drawings in which:

Figure 1      schematically depicts a simplified block diagram of a device for a radio communications system according to an embodiment,

Figure 2      schematically depicts a simplified flowchart of a method according to an embodiment,

Figure 3      schematically depicts a simplified block diagram of a radio communications system according to an embodiment,

Figure 4A     schematically depicts an operational scenario according to an embodiment,

Figure 4B     schematically depicts a further operational scenario according to an embodiment,

Figure 5A     schematically depicts an image according to an embodiment,

Figure 5B     schematically depicts an image according to a further embodiment,

Figure 6      schematically depicts an image according to a further embodiment,

Figure 7      schematically depicts a simplified block diagram of a mobile device according to an embodiment,

Figure 8      schematically depicts a mobile device according to a further embodiment,

Figure 9      schematically depicts a simplified flowchart of a method of operating a mobile device according to an embodiment, and

Figure 10     schematically depicts a block diagram according to a further embodiment.

## Description of the embodiments

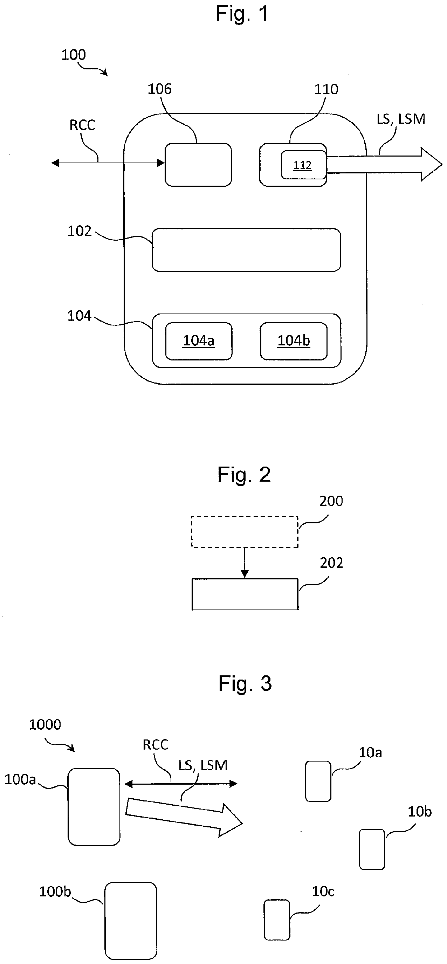

Figure 1 schematically depicts a simplified block diagram of a device 100 for a radio communications system according to an embodiment. A corresponding radio communications system 1000 will be explained further below with reference to Fig. 3.

The device 100 includes at least a processing unit 102 such as a digital signal processor (DSP) or general purpose microprocessor or correspondingly configured field programmable gate array (FPGA) or an ASIC (application specific integrated circuit) or the like. The device 100 further comprises a memory unit 104 comprising RAM (random access memory) 104a and/or ROM (read only memory) 104b and/or other forms of volatile and/or non-volatile memory devices. The device 100 also comprises a transceiver 106, said transceiver 106 having a transmitter (not shown) and a receiver (not shown) and being configurable to exchange data with at least one further device by means of a radio communications channel RCC. Such a radio communications channel RCC may be a channel as implemented in known telecommunications technologies, including, but not limited to, any version of any of the standards presently known and referred to as WiFi (IEEE 802.11), GSM, CDMA2000, TD-SCDMA, W-CDMA, 3G, 4G, LTE, LTE-Advanced or WiMax. Additionally, radio communication channels that will be defined for future technologies, such as 5G, may be used, if available.

Still further, the device 100 comprises a light emitting device 110 configurable to emit at least one light signal LS in the infrared wavelength range comprising information related to said device 100 for facilitating establishment of the radio communications channel RCC between the device 100 and the at least one further device. Thus, other devices comprising suitable optical receivers may be optically notified of the presence of the device 100 and be supplied with information using the optical domain signal transmission that may enable them to establish a connection with the device 100 via the radio communications channel, as explained in more detail further below.

While the application of the principle according to the embodiments is not limited to access points of radio communications systems, for the following exemplary description it is assumed that device 100 represents an access point (AP) of a radio communications system enabling further devices to wirelessly exchange data with said AP 100 via said radio communications channel RCC. The AP 100 provides access to a further network (not shown) that is part of the communication system 1000 as is known in the art. The AP 100 may take the form of a base station.

According to an embodiment, the light emitting device 110 may comprise one or more semiconductor light sources 112, such as e.g. light emitting diodes (LED), for example IR LEDs.

According to a particularly preferred embodiment, said light emitting device 110 is configurable to provide a modulated light signal LSM, which advantageously enables to convey information to potential receivers receiving said modulated light signal LSM.

According to an embodiment, said light emitting device 110 is configurable to use at least one of the following modulation schemes: amplitude shift keying, particularly on-off keying, OOK, frequency shift keying, FSK.

According to further embodiments, other modulation schemes may also be used to provide said modulated light signal LSM.

According to a further embodiment, an operation of the light emitting device 110 may e.g. be controlled by the processing unit 102 of the access point 100. A corresponding software or computer program for control of the light emitting device 110 may e.g. be provided in the memory unit 104.

According to a further embodiment said infrared wavelength range comprises wavelengths between about 700 nanometers, nm, and about 1400 nm, preferably between about 780 nm and 1000 nm. This is particularly beneficial since many conventional cameras are equipped with a receiver, such as an image sensor, capable of efficiently detecting optical signals such as said modulated light signal LSM with a transmission wavelength within said wavelength range.

Also, the proposed IR wavelength range for the light signal LS and the modulated light signal LSM is invisible to the (naked) human eye thus presenting a non-intrusive approach to optical signal transmission from the access point 100 to further devices.

Figure 2 schematically depicts a simplified flow chart of a method of operating a device 100 for a radio communications system according to an embodiment. In a first optional step 200, the device, e.g. access point, 100 (Fig. 1) collects information to be transmitted to further devices by means of said modulated light signal LSM. In particular, such information is collected for the purpose of facilitating establishment of said radio communications channel RCC with further devices, e.g. if a user of such further device desires to establish such connection. Such information may e.g. comprise identification information of the device 100. Other examples of information that may be used for this purpose include, but are not limited to position information characterizing a spatial position of the device 100, and one or more operational parameters of the device 100, information characterizing said radio communications channel RCC.

In a second step 202 (Fig. 2), the light emitting device 110 emits a modulated light signal LSM (Fig. 1) in the IR wavelength range, wherein at least one of the above-mentioned information is comprised within said modulated light signal LSM.

According to an embodiment, the modulation, e.g. using an OOK modulation scheme, may be effected by appropriately switching one or more IR LEDs of said semiconductor light source 112 (Fig. 1) between an "on" state and an "off" state, wherein said switching is controlled by a corresponding modulation signal which may e.g. be provided by the processing unit 102 or a component of the light emitting device 110.

According to a further embodiment, at least fifty percent of signal energy of the modulated light signal LSM, is located in a modulation frequency range between 0 Hertz, Hz, and 200 Hz. By, at least predominantly, using modulation frequencies below about 200 Hz to modulate information onto the infrared light signal, a reliable detection with conventional camera equipment, such as cameras built into conventional smartphones or tablets, is possible, e.g. preventing that a receiver's camera cannot follow the signal frequencies of the modulated light signal LSM which are carrying information.

Figure 3 schematically depicts a simplified block diagram of a radio communications system 1000 according to an embodiment.

The System 1000 comprises a first access point 100a which may for example comprise the structure as explained above for device 100 with reference to Fig. 1. As explained above, the first access point 100a may exchange data with at least one further device such as the devices 10a, 10b, 10c of Fig. 3 by means of at least one radio communications channel RCC. Moreover, the first access point 100a may also provide a light signal LS, or preferably a modulated light signal LSM, as also explained above with reference to figure 1.

In contrast to the modulated light signal LSM, according to some embodiments, the light signal LS may be an unmodulated light signal, which may e.g. be provided by switching on one or more semiconductor light sources 112 of the light emitting device 110 and leaving them in the "on" state. While this configuration cannot convey much information to potential receivers, it may well signalize by means of the optical IR signal LS to potential receivers that said first access point 100a is present and potentially available for wireless data communication using the at least one radio communications channel RCC.

However, according to preferred embodiments, the first access point 100a may provide a modulated light signal LSM as explained above which enables to supply potential receivers that may be comprised in the further devices 10a, 10b, 10c with various types of information related to said first access point 100a.

According to further embodiments, it is also possible that for some time, the first access point 100a provides an unmodulated light signal LS, and for some other times, said first access point 100a provides said modulated light signal LSM.

According to other embodiments, it is also possible that at least temporarily the access point 100a does not provide any light signal LS, LSM.

According to an embodiment, the further access point 100b of figure 3 may comprise a structure similar or identical to that of the first access point 100a. In this case, for example, both access points 100a, 100b may emit a respective modulated light signal which may comprise identification information that may be used by potential receivers to distinguish between both said access points 100a, 100b. In other words, upon receiving the respective modulated light signal from both access points 100a, 100b, according to some embodiments, a receiver may be configured to demodulate the received modulated light signals and to obtain the respective identification information associated with said access points 100a, 100b. This way, the receiver is notified of the identity of both access points 100a, 100b employing the optical data transmission channels embodied by the respective modulated light signals of the corresponding light emitting devices 110.

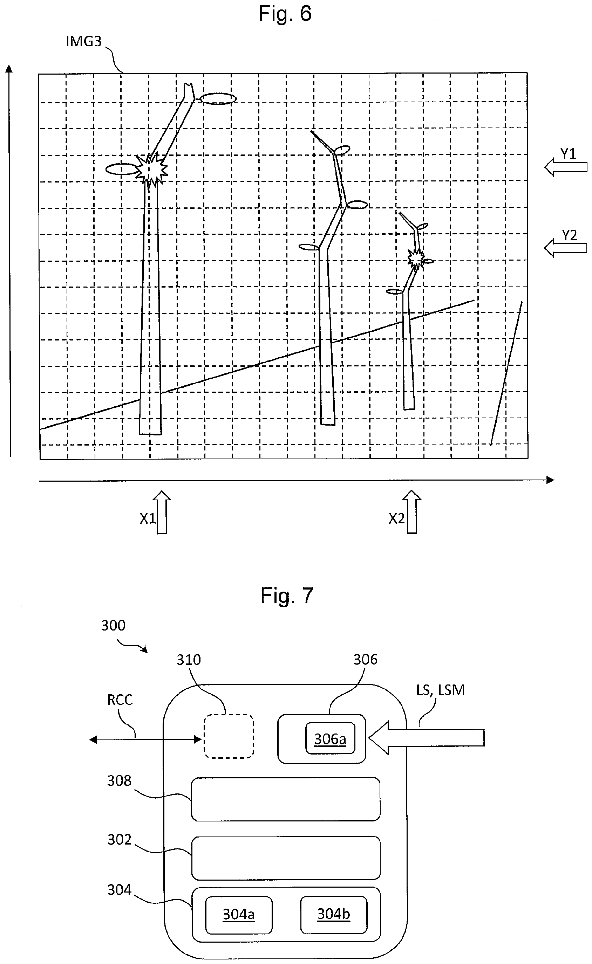

Figure 7 schematically depicts a simplified block diagram of a mobile device 300 according to an embodiment. As an example, one or more of the further devices 10a, 10b, 10c of Fig. 3 may comprise a structure 300 as explained in the following with reference to figure 7.

The mobile device 300 comprises a processing unit 302 such as a DSP or general purpose microprocessor or correspondingly configured FPGA or an ASIC or the like. The mobile device 300 further comprises a memory unit 304 comprising RAM 304a and/or ROM 304b and/or other forms of volatile and/or non-volatile memory devices. The mobile device 300 also comprises a camera 306 for capturing one or more images, e.g. of a real-world environment surrounding the mobile device 300, as well as a display 308. The display 308 may e.g. be used to present to a user of the mobile device 300 a graphical user interface (GUI), but may also be used to display one or more captured images that have been obtained by the camera 306.

Particularly, besides being able to capture images based on visible light, the camera 306 enables a capturing of one or more light signals LS and/or modulated light signals LSM in the infrared wavelength range provided by an access point 100a (Fig. 1) according to the embodiments as explained above with reference to figure 1 and figure 2.

More specifically, an image sensor 306a of the camera 306 is configured such that it can detect spectral components of the wavelength range used for the light signals LS, LSM, i.e. presently spectral components of the IR wavelength range. Preferably, the image sensor 306a is capable of detecting wavelengths of a visible wavelength range. In other words, according to a preferred embodiment, the image sensor 306a can detect signals in the visible wavelength range as well as signals of the IR wavelength range as used by the light emitting device 110 according to the embodiments. The image sensor 306a may be capable of generating electrical signals in response to the reception of detection of the light signals LS, LSM, which electrical signals may serve as an input for the processing unit 302. For example, the sensor 306a may be provided on a charge-coupled device (CCD) integrated circuit.

The mobile device 300 also comprises a transceiver 310, said transceiver 310 having a transmitter (not shown) and a receiver (not shown) and being configurable to exchange data with at least one further device, such as the access point 100 (Fig. 1), 100a (Fig. 3) via the radio communications channel RCC.

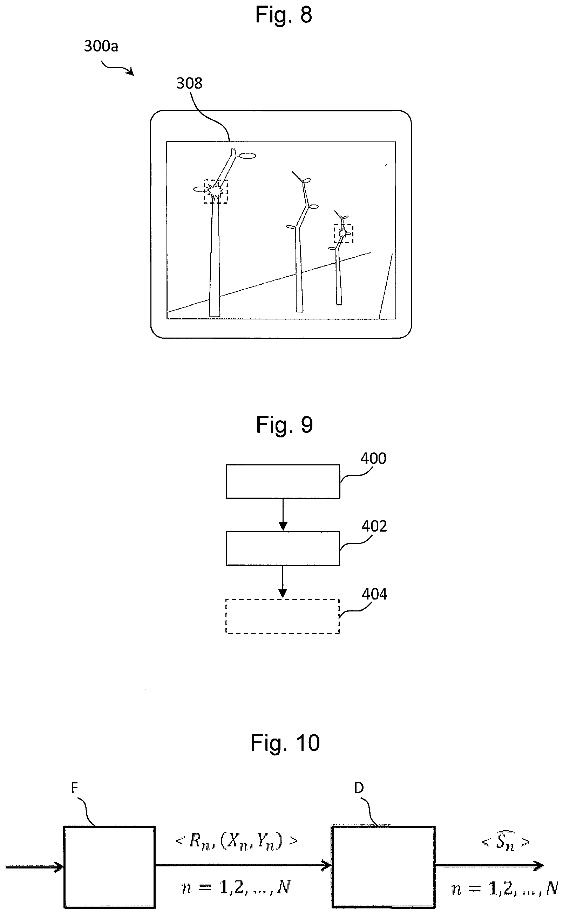

Figure 9 schematically depicts a simplified flowchart of a method of operating a mobile device 300 according to an embodiment. In a first step 400, the mobile device 300 (Fig. 7) captures with its camera 306 at least one image of a surrounding area. In the following step 402 (Fig. 9) the mobile device 300 detects the presence of at least one access point 100, 100a by detecting one or more light signals LS, LSM emitted by the at least one access point 100, 100a if at least portions of these signals are comprised within said at least one image that has been captured in step 400. The mobile device 300 then further evaluates the information modulated onto the one or more signals. The mobile device 300 may then notify the detection to a user of the mobile device 300 via the display 308. The user may decide to establish a connection with the access point 100, 100a. Alternatively, the mobile device 300 may be configured to establish such connection without explicit instructions. The mobile device 300 may establish such connection via the radio communications channel RCC using the information received via the detected light signal LSM.

Optionally, in a further step 404, the mobile device 300 may perform further actions depending on the information gathered during the preceding steps 400, 402.

As an example, for step 404, the mobile device 300 may determine a position of at least one access point 100 within at least one captured image and may visualise said at least one device on the display 308 (Fig. 7) depending on said position.

As a further example, the mobile device 300 may place a graphical symbol representing said access point 100 at specific coordinates within said display 308, wherein said coordinates depend on the position of the access point 100 as determined within said captured image. Alternatively, or additionally, according to further embodiments, direction information may be presented on the display 308 notifying the user of a specific direction said access point 100 is positioned at, e.g. a direction relative to a current spatial orientation of the display 308 and/or the mobile device 300. This enables a user of the mobile device to visually become aware of the access point 100 although he cannot directly perceive the transmitted IR light signals LS, LSM of said access point 100 himself.

According to a further embodiment, said mobile device 300 identifies said at least one access point 100 (e.g., by detecting its modulated light signal LSM and by demodulating said modulated light signal LSM to obtain the desired identification information), presents on said display 308 a real-world environment view based on said at least one image that has been captured in step 400, and augments said real-world environment view by adding information related to said at least one identified access point 100.

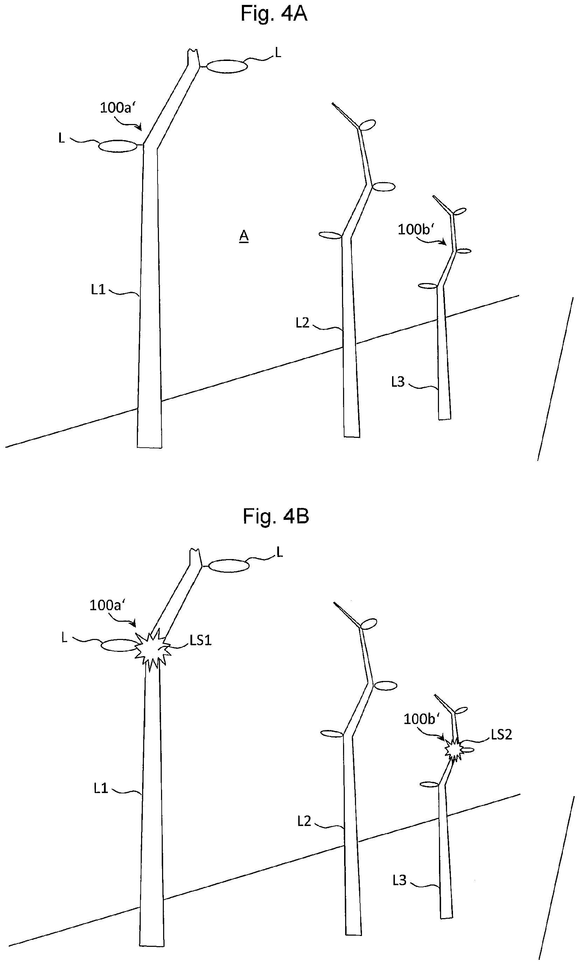

In the following, a preferred operational scenario of the devices 100, 300 according to the embodiments is explained with reference to figures 4A to 5B.

Figure 4A schematically depicts an exemplary operational scenario, as seen with the human eye, wherein three lamp posts L1, L2, L3 are deployed in an outdoor area A. Each lamp post L1, L2, L3 comprises several light sources L for illuminating at least portions of said outdoor area A, wherein only two light sources of the first lamp post L1 are denoted with the reference sign "L" for reasons of clarity.

For the further explanations of the embodiment, it is not relevant whether the light sources L of the lamp posts are switched on or not, i.e. currently illuminating the outdoor area A or not. Rather, the lamp posts L1, L2, L3 more or less serve as a target system for mounting access point devices according to the embodiments. In this setting depicted by a figure 4A, two access points of the type 100 as explained above with reference to figure 1 are deployed, wherein a position of the first access point is indicated by reference sign 100a', and the position of the second access point is indicated by reference sign 100b'. Note that the access points themselves are basically not visible, as they are integrated into the respective lamp posts L1, L3.

Figure 4B schematically depicts the exemplary operational scenario of Fig. 4A, however, as "seen" or detected with the camera 306 of the mobile device 300 (Fig. 7). As the access points are still "hidden" within the lamp posts L1, L3, they are not visible, either, in the depiction of figure 4B. However, as the image sensor 306a of the camera 306 is also sensitive to IR wavelengths, in the depiction of figure 4B, light signals LS1, LS2 can be identified at the indicated positions 100a', 100b' of the access points. This is because currently both access points are emitting a respective light signal LS1, LS2 (which may or may not be a modulated light signal) in the IR wavelength range.

Advantageously, the image data as symbolically depicted by figure 4B may be displayed on the display 308 of the mobile device 300, so that a user of the mobile device 300 can visually identify the light signals LS1, LS2, too. In other words, capturing at least one image of the outdoor area A (Fig. 4A) with its lamp posts L1, L2, L3 and the access points integrated therein and displaying such captured image to the user of the mobile device 300 enables the user of the mobile device 300 to visually detect the light signals LS1, LS2 originating from the access points according to the embodiments.

For example, according to a further embodiment, the mobile device 300 may be configured such that its camera 306 can be operated in a preview mode, wherein periodically (e.g., with a frequency of some few Hertz, for example 5 Hertz) images from the surrounding area are captured. In this preview mode, IR light signals LS1, LS2 from access points are also presented in the course of the preview, so that a user may point the camera at different directions to efficiently determine whether (further) access points according to the embodiments, which emit IR light signals, are present.

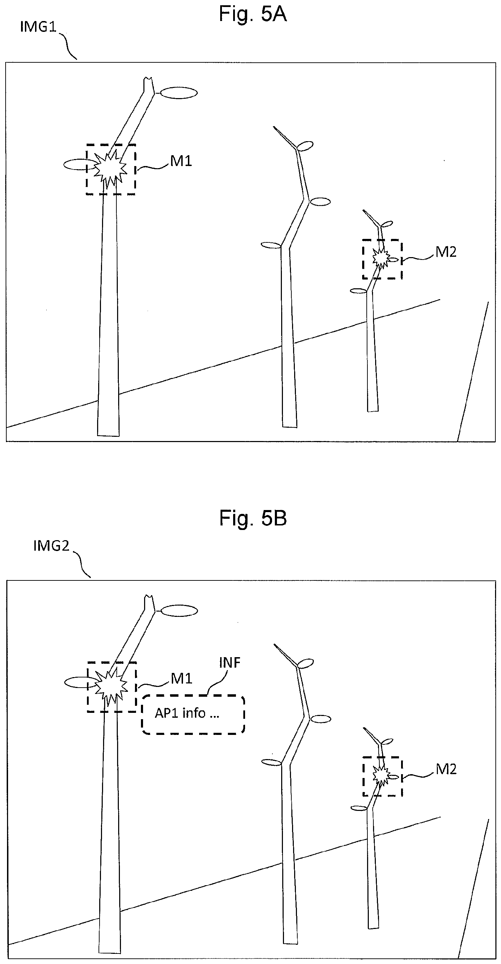

Figure 5A schematically depicts an image IMG1 according to an embodiment. This image IMG1 has been obtained as explained above with reference to figures 9, 4A, 4B. In addition to presenting on the display 308 (Fig.

7) of the mobile device 300 the captured image data including the light signals of the access points, the mobile device 300 may enhance the displayed data by adding visual markers M1, M2, presently in the form of dashed rectangles or squares, at the respective positions of the IR light sources within the captured image. Thus, a real-world view of the outdoor area A (Fig. 4A) as captured by the camera 306 (Fig. 7) is augmented by the markers M1, M2 (Fig. 5A). This way, the spatial position of the respective access points is clearly presented to a user of the mobile device.

Figure 5B schematically depicts an image IMG2 according to a further embodiment. Presently, for the light signal of the first access point, which is marked by the visual marker M1, additional information INF is blended into the displayed image IMG2, wherein presently said additional information is symbolised by the text "AP1 info ...". Such additional information may e.g. comprise any type of information that has been provided by the access point via the modulated light signal LSM (Fig. 1) and has been received and detected by the mobile device 300 (Fig. 7). As will be mentioned hereinafter, at least a portion of the additional information could be obtained via the radio communication channel RCC after establishment of a connection between the access point and the mobile device 300.

As the information modulated onto the IR light signal LSM (Fig. 1) may dynamically change according to some embodiments, the additional information INF (Fig. 5B) displayed within the image IMG2 may also dynamically change. For example, an access point may transmit via its modulated light signal LSM (Fig. 1) a current load status of a radio cell provided thereby, which evidently may dynamically change. A mobile device 300 according to the embodiments may periodically capture an image such as IMG2 of Fig. 5B, may decode the current load status transmitted from said access point, and may blend into the image IMG2 (and subsequent images of this type) the said demodulated current load status, so that a user of the device 300 is continuously informed on the information currently transmitted by the access point via its optical transmission channel implemented in form of the modulated light signal LSM.

In other words, according to some embodiments, the mobile device 300 is configured to periodically capture images by means of its camera 306 and to perform the process as explained with reference to figure 9. This way, it is possible to provide a real-time or near-real-time view of the real-world environment, e.g. the outdoor area A (Fig. 4A), around the camera 306, which may optionally be augmented by information related to access points that may be present within said real-time view thus providing an augmented view of the real-world environment which comprises valuable information on potentially present access points 100a, 100b and their properties and the like.

In this context, figure 8 schematically depicts a mobile device 300a according to an embodiment. As can be seen, an augmented reality (AR) view of a real-world environment is presented on the display 308 of the device 300a. Presently, the contents presented on the display 308 are similar to those of the embodiment explained above with reference to figure 5A.

Figure 6 schematically depicts an image IMG3 according to a further embodiment. In this embodiment, the mobile device 300 is configured to determine a position of at least one access point according to the embodiments within a captured image IMG3. As an example, the depicted coordinate grid with a horizontal axis and a vertical axis may be used for defining respective positions within said image IMG3.

For example, the mentioned process of position determination yields coordinate values $(X1, Y1)$ for the first access point and coordinate values $(X2, Y2)$ for the second access point.

Figure 10 schematically depicts a block diagram according to a further embodiment. A receiver chain, which may e.g. be used in the mobile device 300, comprises an IR filter F and a Detector D.

For the present example, it is assumed that many (N) active (i.e., currently transmitting a (modulated) light signal LS, LSM) APs 100 (Fig. 1) may be present in the vicinity of the device 300. A signal containing identification information ("ID") of the AP and, possibly, some other additional information, is denoted as Sn. Said signal Sn is being sent by APn, with n=1, 2, ..., N. At the mobile device 300, a receiver (which may e.g. be implemented by the processing unit 302 of the device 300 and a respective software program) may first process an image captured by the camera 306 (Fig. 7) with the IR filter F, cf. Fig. 10. According to an embodiment, the IR filter F is configured to:

  a) estimate the number N of APs;

  b) then, for each of said N APs, determine the position $(Xn, Yn)$ (cf. Fig. 6) of the received signal Rn (which is typically a noisy version of Sn) in the captured image (wherein said image may be displayed on the screen 308).

An example of the coordinates used for this process has been explained above with reference to Fig. 6.

At an output of the IR filter F, tuples <Rn, $(Xn, Yn)$> combining the received signal Rn for a specific access point "n" with the determined position $(Xn, Yn)$ are obtained and forwarded to the detector D.

The detector D processes each received signal Rn to get $\widehat{S_n}$, which is an estimate of the noiseless transmitted light signal Sn (also cf. the light signals LSM explained above).

According to a further embodiment, after processing the received signal Rn from the AP, for each AP n with n=1, 2, ..., N, the mobile device 300 may perform one or more of the following steps:

a) visualize the AP on the screen (e.g., display 308), preferably together with its position (Xn, Yn);

b) establish a connection with the AP via the radio communications channel RCC;

c) identify the AP thanks to its ID that may be derived from the signal Sn and/or from data received over the radio communications channel RCC after establishment of a connection with the AP; and

d) provide further information regarding the AP, which may include position information, based on evaluation of the signal Sn and/or data received over the radio communications channel RCC after establishment of a connection with the AP.

According to further embodiments, the functionality of the mobile device 300 (Fig. 7) may also be implemented in a non-mobile, i.e. stationary, device. However, according to a preferred embodiment, the functionality is provided in a mobile device such as a user equipment for a radio communications system, e.g. a smartphone, or a tablet.

According to further embodiments, conventional user equipment for a radio communications systems such as WiFi-and/or LTE-compatible user devices, e.g. smartphones or tablets, may be enhanced by adding the functionality according to the embodiments. In many cases, such conventional devices may already comprise a camera 306 suitable for (also) capturing IR signals. In these cases, the functionality according to the embodiments may advantageously be added to the conventional devices in the form of firmware or software that may be executed by a processing device 302 thereof.

The principle according to the embodiments may be used to visualize, e.g., on a screen (display 308, cf. Fig. 7) of a mobile device 300, such as a smartphone or tablet, a position and/or status (e.g., load, available RF beams, etc.) of access points (APs) according to the embodiments nearby, wherein "nearby" in the present context denotes the range of the optical signal LS, LSM as provided by said access point. Advantageously, such visualization may (but, according to some embodiments, is not necessarily required to) be combined with one or more camera images as captured by a camera of the smartphone or tablet.

According to further embodiments, it is also possible to provide an AP 100a (Fig. 3) with some virtual haptic (i.e., touch-based) feedback from a user that can be used by the system 1000 (Fig. 3) to improve the quality of service of that particular user.

Advantageously, the principle according to the embodiments enables to efficiently detect a presence of access points and to identify all access points according to the embodiments, which are within the range of the transmitted light signal LS, LSM. Particularly, even access points that are either not visible to the human/camera eye (e.g., because of their concealed positions, cf. the embodiment of Fig. 4A) or do not (yet) cover the user's position (e.g., a mm-wave AP with limited coverage that is not probing beams pointing towards a given user's location) may be recognized and identified if their light signal LS, LSM can be received by the mobile device according to the embodiments.

The principle according to the embodiments is particularly well-suited for applications in the field of augmented reality (AR), because it enables to visually identify the access points 100 according to the embodiments on a display of a mobile device.

A further advantage of the principle according to the embodiments is the fact that a substantial amount of information can be transmitted using the modulated light signals LSM, which is primarily only limited by the capabilities of the receiving camera system regarding detection of the modulated light signals in the e.g. IR wavelength range and the frequency at which subsequent camera images may be recorded.

Moreover, the type of information transmitted by means of the modulated light signal LSM according to the embodiments may change freely, e.g. under control of a processing unit 102 of the access point 100 (Fig. 1). For example, during different times, different types of information may be transmitted using the modulated light signal LSM, e.g. in the fashion of a time-division multiplexing system.

Also, current values of operational parameters of an access point such as a free capacity, a maximum data rate for radio data exchange, and the like, may be transmitted using the modulated light signal LSM.

The principle according to the embodiments can also efficiently be deployed with existing access points and other devices capable of radio communications with further devices. In principle, an existing conventional access point may be enhanced by adding a light emitting device 110 (Fig. 1) according to the embodiments, e.g. comprising one (or more) IR LEDs, and functionality to control the emission of light signals LS, LSM.

According to further embodiments, several APs, preferably each AP (this applies also to APs to be deployed in the field in future), may then be assigned a unique identification code to help distinguish it from all the other APs. The APs may convey their identification code by correspondingly modulating the light signal LSM, whereby mobile devices 300 that receive such light signal LSM may not only detect the presence of such AP, but may also identify it and distinguish between several APs.

An advantage of the infrared frequencies, which are proposed for the light signals LS, LSM according to preferred embodiments, is that they do not fall into the visible spectrum, i.e., a potential blinking/flickering of the infrared light, which may result from applying modulation schemes, is invisible to the naked (human) eyes. On the other hand, the silicon detectors present in today's cameras and mobile devices such as smartphones and tablets are usually sensitive to infrared wavelengths and, when the camera is active, reproduce the pulses transmitted by the LED in the visible spectrum in the form of one or more (parts of) camera images, whereby the light signals LS, LSM according to the embodiments may be made visible to human beings (through the screen/device display 308 (Fig. 7)).

A further significant advantage of the principle according to the embodiments is the fact that it is easy and cheap to implement in all devices equipped with a camera, as they already have sensors capable of collecting light in the IR spectrum. Only few modifications may be required to be made to a conventional device to allow detection of the signals LS, LSM transmitted by an access point according to the embodiments.

Another significant advantage of the principle according to the embodiments is the fact that the scheme is not intrusive. In fact, even if an ultra-dense network is considered where a user could be served by many APs 100a, 100b, ... (Fig. 3) (note that network densification will become a reality in the next few years to cope with the forecasted increase in demand for greater throughput), people will not notice the blinking of all these LEDs and possibly other light sources that may be used for generating the signals LS, LSM according to the embodiments. Only users who want to use the system according to the embodiments may use the principle according to the embodiments and look for APs. I.e., only those users who voluntarily decide to use the principle according to the embodiments will see e.g. the blinking of the LEDs on their screens when their cameras are activated.

Advantageously, the principle according to the embodiments may be used in many types of applications based on augmented reality, as the access points can be made "visible" by enhancing camera images of real-world settings by means of adding information gathered according to the principle of the embodiments.

In the following, a further exemplary application scenario for the devices 100, 300 according to the embodiments is explained.

A mobile user is considered who is - in this specific example - assumed to be a human being walking around in an outdoor area A (Fig. 4A) and who is looking for a connection setup in the vicinity. In order to check available connections and related access points 100a, 100b (Fig. 3), the user switches on the camera of his mobile device 300 (cf. Fig. 7), and the image as schematically depicted by Fig. 5A is presented to the user on the display 308 (Fig. 7) of his mobile device. From this depiction, the user may recognize two IR light sources, e.g. blinking LEDs on top of the two lamp posts L1, L3 (as recognized by the camera in Figure 4B). Note that, at this stage, the user's mobile device 300 a) visualizes the position of the two APs 100a, 100b (Fig. 3) available in the area A (Fig. 4A), and b) could have already detected the ID of the two APs, e.g., AP1 and AP2, by using conventional RF-based detection techniques, which may e.g. be based on evaluating an RF beacon signal of the respective access points. However, it is still not capable of distinguishing them, i.e., it still does not recognize which of the two blinking LEDs on the screen is related to AP1 and which to AP2.

To obtain sufficient information regarding the APs, the mobile device 300 may detect the signals LS1, LS2 transmitted by the two LEDs and process them according to the principle of the embodiments already explained above. After this operation, the mobile device 300 is able to distinguish the APs , i.e. AP1 and AP2 in this example, in the area (see Figure 5B) and to establish a connection with them.

In some embodiments, a real-world view based on a camera image IMG2 may be presented to the user via the display of the mobile device. Advantageously, said real-world view may be augmented by the information determined by the mobile device, such as the respective access point's identity, and/or further information INF related to a specific detected access point.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

At least parts of the above described radio communications network including base stations could be implemented using network functions virtualization (NFV). NFV is a network architecture that makes use of technologies of computer virtualization. Entire network equipment like base stations or parts thereof or part of their functions can be virtualized using software building blocks that may connect, or interact, to create communication services. A virtualized network function of e.g. a base station may include at least one virtual machine running different software and processes, on top of standard high-volume servers, switches and storage, or a cloud computing infrastructure, instead of having customized hardware appliances for each network function. As such a base station function may be implemented using a computer program product embodied on a non-transitory computer readable medium (M) for performing operations, wherein the computer program product comprises instructions, that when executed by a processor (Pr), perform the operations of the specific base station function.

**Claims**

1. Device (100) for a radio communications system (1000), wherein said device (100) includes at least a processing unit (102), a memory unit (104) and a transceiver (106), wherein said transceiver (106) is configurable to exchange data with at least one further device by means of a radio communications channel (RCC), wherein said device (100) comprises a light emitting device (110) configurable to emit (202) at least one light signal (LS) in the infrared wavelength range comprising information related to said device (100) facilitating establishment of said radio communications channel between the device and the at least one further device.

2. Device (100) according to claim 1, wherein said light emitting device (110) is configurable to provide a modulated light signal (LSM) comprising information for identification of the device (100).

3. Device (100) according to one of the preceding claims, wherein said infrared wavelength range comprises wavelengths between about 700 nanometer, nm, and about 1400 nm, preferably between about 780 nm and about 1000 nm.

4. Device (100) according to one of the preceding claims, wherein said light emitting device (110) is configurable to provide a modulated light signal (LSM) comprising at least one of the following information: position information characterizing a spatial position of the device (100), one or more operational parameters of the device (100), information characterizing said radio communications channel (RCC).

5. Method of operating a device (100) for a radio communications system (1000), wherein said device (100) includes at least a processing unit (102), a memory unit (104) and a transceiver (106), wherein said transceiver (106) is configurable to exchange data with at least one further device by means of a radio communications channel (RCC), wherein said device (100) comprises a light emitting device (110), wherein said light emitting device (110) emits (202) at least one light signal (LS) in the infrared wavelength range comprising information related to said device (100) facilitating establishment between the device and the at least one further device.

6. Method according to claim 5, wherein said light emitting device (110) provides a modulated light signal (LSM) comprising information for identification of the device.

**7.** Method according to one of the claims 5 to 6, wherein said light emitting device (110) provides a modulated light signal (LSM) comprising at least one of the following information: position information characterizing a spatial position of the device (100), one or more operational parameters of the device (100), information characterizing said radio communications channel (RCC).

**8.** Mobile device (300) comprising:

- a processing unit (302);
- a memory unit (304);
- a camera (306), configurable to capture (400) at least one image of a surrounding area;
- a display (308) configurable to display the at least one image to a user; and
- a transceiver (310) configurable to exchange data with at least one device according to any one of claims 1-4 over a radio communications channel; wherein the mobile device is configurable to detect, within said at least one image, the presence of the least one device (100) by evaluating at least one light signal (LS) in the infrared wavelength range comprising information related to said at least one device for facilitating establishment of said radio communications channel between the mobile device (300) and said device (100).

**9.** Mobile device (300) according to claim 8, wherein said mobile device (300) is configurable to identify said at least one device (100), to present on said display (308) a real-world environment view based on said at least one image, and to augment said real-world environment view by adding information related to at least one identified device (100).

**10.** Mobile device (300) according to claim 8 or claim 9, wherein said mobile device (300) is configurable to determine a position of said at least one device (100) within said at least one image, and to visualize the position of said at least one device (100) on the display (308).

**11.** Mobile device (300) according to claim 10, wherein the mobile device is configurable to augment a marker (M1, M2) at the position of said at least one device (100) within said at least one image on the display (308).

**12.** Method of operating a mobile device (300) comprising a processing unit (302), a memory unit (304), a camera (306), a display (308), and a transceiver (310), the method comprising:

- capturing (400) with said camera (306) at least one image of a surrounding area;

- detecting (402), within said image, the presence of at least one device (100) according to one of the claims 1 to 4 by evaluating at least one light signal (LS) in the infrared wavelength range comprising information related to said at least one device for facilitating establishment of a radio communications connection between the mobile device and the at least one device.

**13.** Method according to claim 12, wherein said mobile device (300) identifies said at least one device (100), presents on said display (308) a real-world environment view based on said at least one image, and augments said real-world environment view by adding information related to the at least one identified device (100).

**14.** Method according to claim 12 or claim 13, further comprising:

- determining a position of said at least one device (100) within said at least one image; and
- visualizing the position of said at least one device (100) within said at least one image on the display (308).

**15.** Method according to claim 14, wherein visualizing comprises augmenting a marker (M1, M2) at the position of said at least one device (100) within said at least one image on the display (308).

## Fig. 1

## Fig. 2

## Fig. 3

## Fig. 4A

## Fig. 4B

## Fig. 5A

IMG1

M1

M2

## Fig. 5B

IMG2

M1

INF

AP1 info ...

M2

## Fig. 6

IMG3

Y1

Y2

X1

X2

## Fig. 7

300

310

306

RCC

LS, LSM

306a

308

302

304

304a

304b

# Fig. 8

300a

308

# Fig. 9

400

402

404

# Fig. 10

F

D

$$< R_n, (X_n, Y_n) >$$

$$n = 1, 2, \ldots, N$$

$$< \widehat{S_n} >$$

$$n = 1, 2, \ldots, N$$

Europäisches
Patentamt

European
Patent Office

Office européen
des brevets

**EUROPEAN SEARCH REPORT**

Application Number

EP 16 20 2625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/295619 A1 (KOROKU TAISUKE [JP]) 6 October 2016 (2016-10-06) * figures 1A, 7A, 7B, 8 * * paragraphs [0028], [0029], [0032], [0038], [0049], [0050], [0054], [0060], [0073], [0134] - [0143] * | 1-15 | INV. H04B10/116 |
| X | US 2014/057676 A1 (LORD JOHN D [US] ET AL) 27 February 2014 (2014-02-27) * figure 1 * * paragraphs [0021] - [0033], [0040], [0043] * | 1-15 | |
| X | US 2009/142068 A1 (TAKAHASHI ISAO [JP] ET AL) 4 June 2009 (2009-06-04) * figures 1,3 * * paragraphs [0055] - [0064] * | 1-15 | |
| X | US 2016/248506 A1 (RYAN DANIEL [US] ET AL) 25 August 2016 (2016-08-25) * figures 1,6 * * paragraphs [0053], [0055], [0062], [0063], [0079] - [0082] * | 1-15 | TECHNICAL FIELDS SEARCHED (IPC) H04B |

The present search report has been drawn up for all claims

| Place of search | Date of completion of the search | Examiner |
|---|---|---|
| Munich | 12 May 2017 | Petitit, Nicolas |

EPO FORM 1503 03.82 (P04C01)

## ANNEX TO THE EUROPEAN SEARCH REPORT
## ON EUROPEAN PATENT APPLICATION NO.

EP 16 20 2625

12-05-2017

| Patent document cited in search report | | Publication date | Patent family member(s) | | Publication date |
|---|---|---|---|---|---|
| US 2016295619 | A1 | 06-10-2016 | CN<br>JP<br>US | 106028256 A<br>2016189064 A<br>2016295619 A1 | 12-10-2016<br>04-11-2016<br>06-10-2016 |
| US 2014057676 | A1 | 27-02-2014 | US<br>US | 2014057676 A1<br>2015215295 A1 | 27-02-2014<br>30-07-2015 |
| US 2009142068 | A1 | 04-06-2009 | JP<br>JP<br>US<br>WO | 5267688 B2<br>2012090341 A<br>2009142068 A1<br>2007032394 A1 | 21-08-2013<br>10-05-2012<br>04-06-2009<br>22-03-2007 |
| US 2016248506 | A1 | 25-08-2016 | CA<br>EP<br>US<br>US<br>US<br>US<br>WO | 2931526 A1<br>3075106 A1<br>2015147067 A1<br>2016248506 A1<br>2017041070 A1<br>2017041071 A1<br>2015077767 A1 | 28-05-2015<br>05-10-2016<br>28-05-2015<br>25-08-2016<br>09-02-2017<br>09-02-2017<br>28-05-2015 |

EPO FORM P0459